# NEUE EUROPÄISCHE PATENTSCHRIFT

(11) **EP 1 427 870 B2**
(45) Veröffentlichungstag und Bekanntmachung des Hinweises auf die Entscheidung über den Einspruch: **29.08.2012**
(45) Hinweis auf die Patenterteilung: 21.05.2008
(21) Anmeldenummer: 02799383.1
(22) Anmeldetag: 29.07.2002
(51) Int. Cl.: C23C 24/08, C04B 41/45, C03C 17/22

(54) **SELBSTREINIGENDE KERAMISCHE SCHICHTEN FÜR BACKÖFEN UND VERFAHREN ZUR HERSTELLUNG SELBSTREINIGENDER KERAMISCHER SCHICHTEN.**
SELF-CLEANING CERAMIC LAYERS FOR BAKING OVENS AND METHOD FOR PRODUCTION OF SELF-CLEANING CERAMIC LAYERS
COUCHES CERAMIQUES AUTONETTOYANTES POUR FOURS DE CUISSON ET PROCEDE DE PRODUCTION DE COUCHES CERAMIQUES AUTONETTOYANTES

(30) Priorität: 06.09.2001 DE 10143837
(43) Veröffentlichungstag der Anmeldung: 16.06.2004
(73) Patentinhaber: BSH Bosch und Siemens Hausgeräte GmbH, 81739 München (DE)
(72) Erfinder: NONNINGER, Ralph, 66129 Saarbrücken (DE); BINKLE, Olaf, 66459 Kirkel (DE); FABER, Stefan, 66125 Saarbrücken (DE); JOST, Martin, 66113 Saarbrücken (DE)
(86) Internationale Anmeldenummer: PCT/DE2002/002773
(87) Internationale Veröffentlichungsnummer: WO 2003/027348

(56) Entgegenhaltungen:
- EP-A1- 0 193 398
- EP-A1- 1 087 916
- WO-A1-95//11751
- DE-A1- 3 019 828
- DE-A1- 19 715 940
- DE-C1- 19 635 556
- DE-T2- 69 611 618
- US-A- 3 993 597
- US-A- 6 086 948
- US-A- 6 086 948
- KALLEDER A ET AL: "Nanometer sized particles for viscosity controlled binders for silk screen printing" JOURNAL OF NON-CRYSTALLINE SOLIDS, NORTH-HOLLAND PHYSICS PUBLISHING. AMSTERDAM, NL, Bd. 218, 1. September 1997 (1997-09-01), Seiten 399-402, XP004095609 ISSN: 0022-3093
- FUJISHIMA ET AL: 'Ti02 Photocatalysis Fundamentals and Applications', Mai 1999, KUNDANMINAMI, TOKYO 102-0074
- RISCHARD J.LEWIS SR.: 'Hawley's Condensed Chemical Dictionary', Bd. 12, 1992, ISBN 0-442-01131-8 Seite 41

## Beschreibung

Die Erfindung betrifft ein Verfahren zur Herstellung einer porösen, keramischen Schicht, die auf metallische, keramische, emaillierte und/oder Glas-Substrate unter Verwendung poröser, keramischer Teilchen, bevorzugt Aluminiumoxyd, Titanoxyd und Zirkonoxyd sowie einem anorganischen Bindersystem aufgebracht werden kann. Das anorganische Bindersystem enthält mindestens ein keramisches Nanoteilchen mit einer Teilchengrößen unter 100 nm, bevorzugt unter 50 nm und besonders bevorzugt unter 25 nm, als Lösungsmittel dient Wasser. So hergestellte Schichten eignen sich als selbstreinigende, katalytisch aktive Schichten, z.B. in Backöfen, in Verbrennungsmotoren etc. oder aber allgemein zur Beschichtung von Substraten, um deren spezifische Oberfläche drastisch zu erhöhen, z.B. für katalytische Anwendungen.

Backöfen enthalten einen durch eine Tür verschließbaren und durch eine Backofenmuffel begrenzten Garraum. Beim Braten und Backen werden die Seitenwände des Garraumes z.B. durch Fettspritzer oder Bratensäfte oder ähnliches beschmutzt. Da diese Verschmutzungen beim Backen und Braten nicht zu vermeiden sind, gibt es von Seiten der Hersteller mehrere Möglichkeiten die Wände, die Decke und den Boden, also den Innenraum des Garraumes, zu reinigen. Allgemein unterscheidet man dabei zwischen katalytischer und pyrolytischer Reinigung.

US 6086948 offenbart ein Verfahren zur Herstellung keramischen, diffusionslimitierender Schichten unter Verwendung feindisperser, keramischer Pulver.

Bei der pyrolytischen Reinigung enthält der Garraum sogenannte Grillstäbe die mittels einem gesonderten, elektronisch geregelten Programm angesteuert und erwärmt werden können und bevorzugt an der Decke des Garraumes angebracht sind. Mit Hilfe von Temperaturen über 500 °C (Cepem Cie Euro Equip Menager, ***[***FR 2605391***]*** bzw. Bosch Siemens Haushaltsgeräte GmbH ***[***DE 2526096***])*** werden die organischen Verschmutzungen karbonisiert, also vollständig verbrannt. Die pyrolytische Reinigung ist aufgrund der hohen aufzuwendenden Temperatur aufwendig und kostspielig. Pyrolytisch zu reinigende Herde müssen geeignete Schutzmechanismen besitzen, um die Tür des Garraumes während der Pyrolyse zu blockieren (ab circa 320 °C, Bosch Siemens Hausgeräte GmbH ***[***EP 0940631***])*** und um so den Herd vor einem unsachgemäßem Betrieb zu schützen. Da diese Herde weiterhin höherpreisige Heizelemente benötigen, um die hohe Temperatur überhaupt regeln zu können, haben sich Pyrolysesysteme bisher nur in den Hochpreissegmenten der Herde etablieren können.

Vom Kostenstandpunkt her gesehen sind den Pyrolysesystemen die Katalysesysteme vorzuziehen, da eine katalytische Verbrennung von Verschmutzungen bei niedrigeren Temperaturen, sprich unterhalb von 500 °C verläuft. So kleidet z.B. Matsushita Elec. Ind. Co.Ltd. ***[***JP 03056144***]*** den Ofeninnenraum mit einer katalytisch aktiven Beschichtung aus, die aus einem Bindersystem und einem katalytisch aktiven Pulver besteht. Als Katalysator werden Metalloxide verwendet, bevorzugt Mangandioxyd und als Binder Siliconharze. Mit dieser katalytischen Beschichtung lässt sich der Backofeninnenraum nach Herstellerangaben bereits zwischen 380°C und 400 °C reinigen. Die Mischung eines Katalysators mit einem Bindersystem bzw. einer Schichtmatrix zur Beschichtung der Innenoberfläche eines Backofens findet sich auch bei anderen Backofenherstellern wieder. So verwendet Toshiba ***[Jp 60147478]*** als Katalysator Manganoxyd oder Ferrite sowie als Bindephase Wasserglas. Analog hierzu verwendet Sharp KK ***[***JP 54135076***]*** als Bindephase Quarzsand oder Wasserglas und als Katalysator Eisenoxyd oder Kupferoxyd. Über die Effizienz dieser beiden letztgenannten katalytischen Beschichtungen sind in den jeweiligen Schutzrechten keine Angaben zu finden. Die Onsettemperatur der Beschichtung, also die Temperatur, bei der die Schicht zu arbeiten beginnt, soll jedoch gemäß den vorgenannten Druckschriften bei Toshiba auf 270°C bis 300 °C und bei Sharp KK sogar auf 250 °C abgesenkt worden sein. In der Praxis bedeutet dies, dass katalytische Beschichtungen existieren, die unter 320 °C beginnen Fett und ähnliches im Backofeninnenraum abzubauen, jedoch reicht die Effizienz der Beschichtung nicht aus, diesen Abbau vollständig durchzuführen. Nach jedem Back- oder Bratzyklus verbleiben Reste von nicht abgebautem Fett in bzw. an der Schicht mit der ein Backofeninnenraum ausgekleidet ist, so dass bereits nach sehr kurzer Zeit, die Funktionsweise der Schicht nicht mehr gegeben ist, da sie verlackt. Für einen vollständigen Abbau sind auch in diesen Systemen weiterhin Temperaturen üblicherweise oberhalb von 380 °C notwendig.

Abschließend sei noch auf NGK Insulators Ltd ***[***JP 56095022***]*** hingewiesen, die als Katalysatoren Manganoxyd, Kupferoxyd und Eisenoxyd verwenden und als Schichtmatrix ein poröses Email, um die Menge an aufgebrachtem Katalysator zu erhöhen, sowie auf die Schutzrechte von Matsushita ***[***JP 02069574***]**,* Cie Euripeenne pour L'Equ [Fr 2040822] und Hoover LtD **[**GB 1177434**]**, die allesamt Fluorpolymere als Trägerschicht der Katalysatoren nutzen, um damit die Oberflächenenergie der Trägerschicht zu minimieren und um mögliche Anhaftungen zu vermeiden.

Die pyrolytische Reinigung arbeitet sehr effektiv oberhalb 500 °C, ist jedoch aufgrund verfahrenstechnischer Gegebenheiten kostspielig. Lediglich in Hochpreissegmentherden (maximal 10 % aller Herde) werden diese Systeme zur Zeit eingesetzt. Die Kostenreduktion begünstigte die Entwicklung der katalytischen Reinigung. Hierbei werden die Innenwände des Garraumes mit einer Schicht ausgekleidet die immer einen Katalysator enthält. Als Katalysator eignen sich Manganoxyd, Eisenoxyd und Kupferoxyd, als Bindephase des Katalysators bzw. als Schichtkomponente werden temperaturfeste Polymere, Wasserglas, Quarzsand und Email verwendet. Die Katalysatoren arbeiten oberhalb von 380 °C was wiederum Sicherheitsvorkehrungen und somit zusätzliche Kosten verursacht. Nur in wenigen Fällen sind katalytisch aktive Beschichtungen bekannt, deren Onsettemperatur, also der Beginn des Fettabbaus in der Schicht, zwischen 250°C und 350 °C liegt. Da in diesen Fällen bei einem Dauerbetrieb des Herdes unter 350 °C immer Rückstände in großer Menge in bzw. an der Schicht verbleiben, verlacken diese Backofeninnenbeschichtungen sehr schnell.

Die Katalyse unterliegt thermodynamischen Regeln, ein Katalysator kann die Thermodynamik eines Systems nicht ändern, sondern lediglich die Aktivierungsenergie, also das Bestreben die Reaktion zu beginnen, senken. Obwohl die Verbrennung der organischen Verschmutzungen also thermodynamisch erst bei höherer Temperatur erfolgt, beginnt sie katalytisch initiiert bei niedrigerer Temperatur. Da sich aber bei dieser niedrigen Temperatur nicht alle Teile der organischen Verunreinigungen zersetzten, verbleiben Rückstände, die zu einem Verlacken des Backofeninnenraumes führt. Dies führt dazu, dass sich bereits nach wenigen Back- und Bratzyklen die Optik und Habtik des Backofeninnenraumes drastisch verschlechtert.

Der Erfindung liegt die Aufgabe zugrunde, eine Backofeninnenbeschichtung zu entwickeln, die die beim Braten und Backen anfallenden Verschmutzungen selbstständig, dass heißt durch das Applizieren einer Temperatur deutlich unterhalb 320 °C, eliminiert, wobei die Arbeitstemperatur der Schicht bevorzugt bei 250 °C liegen soll.

Diese und andere Aufgaben werden durch den gegenstand der Anspruche 1 bis 18 gelöst.

Auf diese Weise gelingt es, poröse keramische Schichten herzustellen, die hochtemperaturstabil und sehr abriebbeständig sind. Diese Schichten enthalten sowohl große Poren/Porenvolumina, die für organische Verschmutzungen (z.B. Fette) zugänglich sind, als auch über die eingesetzten porösen keramischen Teilchen kleine Poren, die für die organischen Verschmutzungen nicht zugänglich sind. Die porösen keramischen Schichten besitzen ein sehr hohes Saugvermögen und transportieren die organischen Verunreinigungen (z.B. Fett und Bratensäfte) zunächst in das Innere der erfindungsgemäßen Schicht. Dort werden die Verunreinigungen aufgespreitet, d.h. auf einer sehr großen Oberfläche verteilt. Bei einer Temperatur von 250 °C werden alle Verunreinigungen nahezu vollständig zersetzt und dies ohne, dass die Schicht einen Katalysator enthält Durch das gezielte Abstimmen des Bindersystemes und der Tatsache, dass mindestens ein Nanoteilchen als Bindephase verwendet wird, wird einerseits eine sehr hohe innere Oberfläche, bevorzugt größer 20 m²/g, besonders bevorzugt größer 70 m²/g und besonders bevorzugt größer 120 m²/g, erzeugt, die mit organischen Verunreinigungen beladen wird. Andererseits wird der zur Verbrennung notwendige Reaktionspartner Sauerstoff bereits in den porösen, keramischen Teilchen, ähnlich einem Reservoir, gespeichert, und steht unmittelbar zur Verfügung, so dass die oxidative Verbrennung der Verunreinigungen frühzeitig eingeleitet und nahezu quantitativ bereits bei 250 °C durchgeführt wird.

Zum ersten Male kann somit eine selbstreinigende Schicht für Backöfen hergestellt werden, die bei Temperaturen deutlich unter 380 °C, bevorzugt deutlich unterhalb 320 °C organische Verunreinigungen nahezu quantitativ entfernt. Mit der Herstellung einer aktiven keramischen Schicht ohne Katalysator, aber mit der Möglichkeit organische Verunreinigungen auf einer sehr großen Fläche aufzuspreiten (aufgrund der Nanoteilchen) und dem für die Oxidation notwendigen Reaktionspartner in Form eines Reservoirs in der Schicht bereitzustellen, ist eine neue Möglichkeit der Backofenreinigung gegeben. Im Vergleich zu den kommerziell verfügbaren katalytischen Reinigungssystemen, zeichnet sich die erfindungsgemäße, selbstreinigende Schicht darüber hinaus durch eine deutlich höhere Effizienz, bei niedrigeren Temperaturen, bevorzugt zwischen 280 °C und 250 °C aus und eine frühzeitige Verlackung der Beschichtung wird vermieden..

Die erfindungsgemäße keramische Schicht zeichnet sich durch das Vorhandensein zahlreicher Poren unterschiedlicher Größe und einem hohen inneren Porenvolumen aus. Um diese Poren zu erzeugen, beinhaltet der erfindungsgemäße Versatz bevorzugt zwei unterschiedliche, keramische Pulverteilchen und besonders bevorzugt drei unterschiedliche, keramische Pulverteilchen. Bei den eingesetzten keramischen Teilchen handelt es sich insbesondere um Chalkogenid-, Carbid- oder Nitridpulver, wobei mindestens eines dieser Pulver nanoskalig ist. Bei den Chalkogenidpulvern kann es sich um ein Oxid-, Sulfid-, Selenid- oder Telluridpulver handeln, wobei Oxidpulver bevorzugt sind. Es können alle Pulver eingesetzt werden, die üblicherweise für das Pulversintem verwendet werden. Beispiele sind (gegebenenfalls hydratisierte) Oxide wie ZnO, CeO₂, SnO₂, Al₂O₃, SiO₂, TiO₂, In₂O₃, ZrO₂, Yttrium stabilisiertes ZrO₂, Fe₂O₃, Fe₃O₄, Cu₂O, oder WO₃, aber auch Phosphate, Silikate, Zirkonate, Aluminate und Stannate, Carbide wie WC, CdC₂ oder SiC, Nitride wie BN, AIN, Si₃N₄ und Ti₃N₄, entsprechende Mischoxide wie Metall-Zinn-Oxide, z.B. Indium-Zinn-Oxid (ITO). Weiterhin können auch Mischungen der angegebenen Pulverteilchen eingesetzt werden.

Der erfindungsmäßige Versatz enthält ein keramisches Pulver, das durch eine hohe spezifische, größtenteils innere Oberfläche, größer 50 m²/g, bevorzugt größer 100 m²/g und besonders bevorzugt größer 150 m²/g gekennzeichnet ist. Dieses poröse, keramische Pulver hat eine mittlere Teilchengrößenverteilung größer 30 µm. Bei diesem keramischen Pulver handelt es sich um ein Oxid, Oxidhydrat, Chalkogenid, Nitrid oder Carbid von Si, Al, B, Zn, Zr, Cd, Ti, Ce, Sn, In, La, Fe, Cu, Ta, Nb, V, Mo oder W, besonders bevorzugt von Si, Zr, Al, Fe, und Ti. Besonders bevorzugt werden Oxide eingesetzt. Bevorzugte anorganische Feststoffteilchen sind Aluminiumoxid, Böhmit, Zirkonoxid, Eisenoxyd, Siliziumdioxyd, Titandioxid, Silikate, Steinmehl, Perlite und Zeoliten bzw. Mischungen aus diesen anorganischen Feststoffteilchen.

Weiterhin enthält der erfindungsgemäße Versatz ein anorganisches Bindersystem, bestehend aus einem Lösungsmittel und mindestens einem nanoskaligen Pulver. Die Primärteilchen des nanoskaligen Pulvers können in agglomerierter Form vorliegen, bevorzugt liegen sie nicht agglomeriert bzw. im wesentlichen nicht agglomeriert vor. Bei dem Lösungsmittel können alle bekannten Alkohole bevorzugt 2-Butoxyethanol, Ethanol, 1-Propanol, 2-Propanol, besonders bevorzugt aber Wasser genutzt werden. Bei dem keramischen Pulver handelt es sich um ein Oxid, Oxidhydrat, Chalkogenid, Nitrid oder Carbid von Si, Al, B, Zn, Zr, Cd, Ti, Ce, Sn, In, La, Fe, Cu, Ta, Nb, V, Mo oder W, besonders bevorzugt von Si, Zr, Al, Fe, und Ti. Besonders bevorzugt werden Oxide eingesetzt. Bevorzugte anorganische, nanoskalige Feststoffteilchen sind Aluminiumoxid, Böhmit, Zirkonoxid, Eisenoxyd, Siliziumdioxyd, Titandioxid und Göthit bzw. Mischungen aus diesen anorganischen, nanoskaligen Feststoffteilchen. Zur Viskositätseinstellung des anorganischen Bindersystems können alle bekannten anorganischen und organischen Säuren und Laugen gewählt werden, bevorzugt Salzsäure, Phosphorsäure, Schwefelsäure und Salpetersäure.

Optional kann dem erfindungsgemäßen Versatz ein drittes, keramisches Pulver beigemengt werden, zur gezielten Einstellung der Porosität. Bei diesem Pulver handelt es sich um keramische Teilchen mit einer mittleren Partikelgrößenverteilung zwischen 10 nm und 1 µm, bevorzugt zwischen 150 nm und 600 nm. Stofflich handelt es sich bei dem dritten keramischen Pulver um ein Oxid, Oxidhydrat, Chalkogenid, Nitrid oder Carbid von Si, Al, B, Zn, Zr, Cd, Ti, Ce, Sn, In, La, Fe, Cu, Ta, Nb, V, Mo oder W, besonders bevorzugt von Si, Zr, Al, Fe, und Ti. Besonders bevorzugt werden Oxide eingesetzt. Bevorzugte anorganische Feststoffteilchen sind Aluminiumoxid, Böhmit, Zirkonoxid, Eisenoxyd, Siliziumdioxyd, Titandioxid, Silikate und Steinmehl.

Ebenfalls optional lässt sich der erfindungsgemäße Versatz durch die Zugabe von einer oder mehreren farbgebenden, anorganischen Komponenten erweitern. Als farbgebende Komponente können alle bekannten anorganischen Farbstoffe, bevorzugt Spinelle eingesetzt werden. Durch die Kombination mehrerer farbgebender Komponenten lassen sich neben reinen Farbtönen auch Farbeffekte (Muster und Sprenkel) beliebig einstellen.

Das dritte, optional genutzte keramische Pulver wird mit den ebenfalls optional genutzten farbgebenden Pulvern vermischt und mit dem Lösungsmittel aufgeschlämmt. Zu dieser Aufschlämmung wird das poröse, keramische Pulver sowie das anorganische Bindersystem zugegeben. Es entsteht eine keramische Suspension, die über Spin coating, Dip Coating, Tauchen, Fluten oder bevorzugt Sprühen auf ein gewünschtes Substrat aufgebracht, getrocknet, und anschließend zu einer porösen, keramischen Schicht verdichtet werden kann. Zur Verdichtung können Temperaturen bis zu 1200 °C genutzt werden, bevorzugt aber zwischen 400 °C und 1000 °C und besonders bevorzugt zwischen 700 °C und 850 °C.

Mit Hilfe des erfindungsgemäßen, keramischen Versatzes lassen sich poröse keramische Schichten auf Metall-, Glas-, Email- oder Kerämikflächen aufbringen, mit Schichtdicken zwischen 20 µm und 1 mm, bevorzugt zwischen 70 µm und 600 µm.

In einer besonderen Ausführungsform der Erfindung lassen sich diese porösen, keramischen Schichten mit Katalysatoren belegen, so dass die Schichten für katalytische Reaktionen, z.B. in der chemischen Industrie genutzt werden können.

Das folgende Beispiel erläutert die Erfindung.

### Beispiel 1

15,0 g des Aluminiumoxidpulvers Martoxid MR70 (Fa. Martinswerk) werden mit 10,0 g des Spinellpigmentes PK 3060 (Fa. Ferro) vermischt und mit 52.0 g Wasser aufgeschlämmt. Hierzu werden 70,0 g eines porösen Aluminiumoxydes (Nabalox NG 100, Fa. Nabaltec) gegeben, wodurch man eine hochviskose, breiförmige Aufschlämmung erhält. Nach Zugabe von 3,8 g einer 65 %-igen Salpetersäure wird dir Viskosität stark erniedrigt und es entsteht eine rührfähige Suspension. Zu dieser Suspension werden 26,38 g einer anorganischen Binderlösung (40% nanoskaliges Zirkonoxyd/ 60 % Wasser) hinzugegeben. Die Viskosität der nun sprühfertigen Suspension kann durch geringe Mengen an Wasser und/oder Salpetersäure beliebig eingestellt werden.

Die Erfindung betrifft ein Verfahren zur Herstellung einer hochporösen, keramischen Schicht und zur Aufbringung dieser Schicht auf metallische, keramische, emaillierte und/oder Glas-Substrate unter Verwendung poröser, keramischer Teilchen, bevorzugt Aluminiumoxyd, Titanoxyd und Zirkonoxyd sowie einem anorganischen Bindersystem. Das anorganische Bindersystem enthält mindestens ein keramisches Nanoteilchen mit einer Teilchengröße unter 100 nm, bevorzugt unter 50 nm und besonders bevorzugt unter 25 nm. Als Lösungsmittel dient Wasser. So hergestellte Schichten eignen sich als selbstreinigende, aktive Schichten, z.B. in Backöfen, in Verbrennungsmotoren etc. oder aber allgemein zur Beschichtung von Substraten, um deren spezifische Oberfläche drastisch zu erhöhen, z.B. für Katalysatorsubstrate.

Eine poröse, keramische Schicht, hergestellt nach dem erfindungsgemäßen Verfahren kann z.B. als selbstreinigende Schicht in Backöfen, als Arzneimittelträger, bevorzugt in medizinischen Geräten, als Träger bakterizider Substanzen für bakterizide Anwendungen, als Träger von Duftstoffen und Parfüms, bevorzugt zur Raumluftverbesserung oder als Träger von Katalysatoren oder zur Katalyse chemischer Reaktionen verwendet werden.

Eine poröse, keramische Schicht, hergestellt nach dem erfindungsgemäßen Verfahren kann z.B. als selbstreinigende Schicht in Backöfen, als Arzneimittelträger, bevorzugt in medizinischen Geräten, als Träger bakterizider Substanzen für bakterizide Anwendungen, als Träger von Duftstoffen und Parfüms, bevorzugt zur Raumluftverbesserung oder als Träger von Katalysatoren oder zur Katalyse chemischer Reaktionen verwendet werden.

## Patentansprüche

1. Verfahren zur Herstellung einer porösen, keramischen Schicht, wobei ein poröses keramisches Pulver mit einem anorganischen Bindersystem, das mindestens ein nanoskaliges Pulver sowie ein Lösungsmittel enthält, zu einem Versatz vermischt wird, **dadurch gekennzeichnet, dass** das poröse keramische Pulver eine hohe spezifische, größtenteils innere Oberfläche größer 50 m²/g, bevorzugt größer 100 m²/g und besonders bevorzugt größer 150 m²/g aufweist, wobei das poröse, keramische Pulver eine mittlere Teilchengrößenverteilung größer 30 µm hat.

2. Verfahren nach Anspruch 1,
**dadurch gekennzeichnet, dass** als Lösungsmittel Wasser verwendet wird.

3. Verfahren nach Anspruch 1 oder 2,
**dadurch gekennzeichnet, dass** als Lösungsmittel Alkohol, vorzugsweise 2-Butoxyethanol, Ethanol, 1-Propanol oder 2-Propanol verwendet wird.

4. Verfahren nach einem der Ansprüche 1 bis 3,
**dadurch gekennzeichnet, dass** als poröses keramisches Pulver ein Oxid, Oxihydrat, Chalkonid, Nitrid oder Carbid von Si, Al, B, Zn, Zr, Cd, Ti, Fe oder Ti, vorzugsweise ein Oxidpulver und besonders bevorzugt Aluminiumoxid, Böhmit, Zirkonoxid, Eisenoxyd, Siliziumdioxyd, Titandioxid, Silikate, Steinmehl, Perlite oder Zeolite bzw. Mischungen aus diesen anorganischen Feststoffteilchen eingesetzt wird bzw. werden.

5. Verfahren nach einem der Ansprüche 1 bis 4,
**dadurch gekennzeichnet, dass** der Gehalt an porösem, keramischem Pulver in dem Versatz zwischen 20 und 80 Gew.-%, bevorzugt jedoch zwischen 50 und 80 Gew.-%, immer bezogen auf den Feststoffgehalt des Versatzes liegt.

6. Verfahren nach einem der Ansprüche 1 bis 5,
**dadurch gekennzeichnet, dass** das nanoskalige Pulver anorganische Nanoteilchen enthält, wobei als anorganische Nanoteilchen insbesondere Al₂O₃, AlO(OH), ZrO₂, TiO₂, SiO₂, Fe₃O₄ SnO₂ oder Mischungen dieser Nanoteilchen verwendet werden, weiter die mittlere Primärteilchengröße der eingesetzten Nanoteilchen unter 100 nm, bevorzugt unter 50 nm und besonders bevorzugt unter 20 nm liegt, und dass als Lösungsmittel in Bindersystem Alkohole und/oder Wasser eingesetzt werden.

7. Verfahren nach einem der Ansprüche 1 bis 6,
**dadurch gekennzeichnet, dass** der Gehalt an nanoskaligem Pulver in der als Bindemittel vorliegenden keramischen Suspension zwischen 1 und 20 Gew.-%, bevorzugt jedoch zwischen 5 und 15 Gew.-%, bezogen auf den Feststoffgehalt des Versatzes, liegt.

8. Verfahren nach einem der Ansprüche 1 bis 7,
**dadurch gekennzeichnet, dass** der Versatz ein drittes keramisches Pulver enthält, wobei das dritte keramische Pulver ein keramisches Pulver mit einer mittleren Partikelgrößenverteilung zwischen 10 nm und 1 µm, bevorzugt zwischen 150 nm und 600 nm, ist, und wobei als drittes keramisches Pulver ein Oxid, bevorzugt Aluminiumoxid, Böhmit, Zirkonoxid, Eisenoxyd, Siliziumdioxyd, Titandioxid, Silikate oder Steinmehl eingesetzt wird.

9. Verfahren nach Anspruch 8,
**dadurch gekennzeichnet, dass** der Gehalt an dem dritten keramischen Pulver im Versatz zwischen 5 und 50 Gew.-%, bevorzugt jedoch zwischen 10 und 30 Gew.-%, immer bezogen auf den Feststoffgehalt des Versatzes, liegt.

10. Verfahren nach einem der Ansprüche 1 bis 9,
**dadurch gekennzeichnet, dass** dem Versatz ein oder mehrere anorganische Farbstoffe beigemengt sind, wobei als anorganische Farbstoffe bevorzugt Spinelle eingesetzt werden, und wobei sich durch die Kombination mehrerer verschiedener anorganischer Farbstoffe neben reinen Farbtönen auch Farbeffekte (Muster und Sprenkel) beliebig einstellen lassen.

11. Verfahren nach einem der Ansprüche 1 bis 10,
**dadurch gekennzeichnet, dass** der Versatz über Verfahren wie Spin Coating, Dip Coating, Tauchen, Fluten und bevorzugt Sprühen auf ein gewünschtes keramisches oder metallisches oder emailliertes oder glasartiges Substrat aufgebracht, getrocknet und zu einer porösen anorganischen Schicht verdichtet wird.

12. Verfahren nach Anspruch 11,
**dadurch gekennzeichnet, dass** die keramische Schicht bei Temperaturen bis zu 1200°C, bevorzugt aber zwischen 200°C und 1000°C verdichtet wird.

13. Poröse, keramische Schicht, herstellbar nach dem Verfahren gemäß einem der Ansprüche 1 bis 12.

14. Poröse, keramische Schicht gemäß Anspruch 13,
**dadurch gekennzeichnet, dass** die Schicht eine innere Oberfläche von mehr als 20 m²/g, vorzugsweise mehr als 70 m²/g und besonders bevorzugt von mehr als 120 m²/g aufweist.

15. Verwendung der porösen keramischen Schicht gemäß Anspruch 13 oder 14 als selbstreinigende Schicht in Backöfen.

16. Verwendung der porösen keramischen Schicht gemäß Anspruch 13 oder 14 als Arzneimittelträger, bevorzugt in medizinischen Geräten.

17. Verwendung der porösen keramischen Schicht gemäß Anspruch 13 oder 14 als Träger bakterizider Substanzen für bakterizide Anwendungen.

18. Verwendung der porösen keramischen Schicht gemäß Anspruch 13 oder 14 als Träger von Katalysatoren.

## Claims

1. Method for producing a porous ceramic layer, wherein a porous ceramic powder is mixed with an inorganic binder system containing at least one nano-scale powder and a solvent to form a mixture, **characterised in that** the porous ceramic powder has a high specific, largely inner surface of greater than 50 m²/g, preferably greater than 100 m²/g and most preferably greater than 150 m²/g, wherein the porous ceramic powder has an average particle size distribution of more than 30 µm.

2. Method according to claim 1, **characterised in that** the solvent used is water.

3. Method according to claim 1 or 2, **characterised in that** the solvent used is alcohol, preferably 2-butoxyethanol, ethanol, 1-propanol or 2-propanol.

4. Method according to any one of claims 1 to 3, **characterised in that** the porous ceramic powder which is used or will be used is an oxide, oxihydrate, chalcogenide, nitride or carbide of Si, Al, B, Zn, Zr, Cd, Ti, Fe or Ti, preferably an oxide powder, and most preferably aluminium oxide, boehmite, zirconium oxide, iron oxide, silicon dioxide, titanium dioxide, silicates, rock flour, perlites or zeolites or mixtures of these inorganic solid particles.

5. Method according to any one of claims 1 to 4, **characterised in that** the content of the porous ceramic powder in the mixture is between 20 and 80% by weight, preferably between 50 and 80% by weight, based on the solid content of the mixture.

6. Method according to any one of claims 1 to 5, **characterised in that** the nano-scale powder comprises inorganic nanoparticles, wherein especially inorganic nanoparticles of Al₂O₃, AlO(OH), ZrO₂, TiO₂, SiO₂, Fe₃O₄, SnO₂ or mixtures of these nanoparticles are used, the average primary particle size of the used nanoparticles is below 100 nm, preferably below 50 nm, and most preferably below 20 nm, and that alcohol and/or water is or are used as solvent in the binder system.

7. Method according to any one of claims 1 to 6, **characterised in that** the content of nano-scale powder in the ceramic suspension being present as a binder is between 1 and 20% by weight, preferably between 5 and 15% by weight.

8. Method according to any one of claims 1 to 7, **characterised in that** the mixture comprises a third ceramic powder, wherein the third ceramic powder is a ceramic powder having an average particle size distribution between 10 nm and 1 µm, preferably between 150 nm and 600 nm, and wherein as the third ceramic powder an oxide, preferably aluminium oxide, boehmite, zirconium oxide, iron oxide, silicon dioxide, titanium dioxide, silicates or rock flour is used.

9. Method according to claim 8, **characterised in that** the amount of the third ceramic powder in the mixture is between 5 and 50% by weight, preferably between 10 and 30% by weight, based on the solid content of the mixture.

10. Method according to any one of claims 1 to 9, **characterised in that** one or more inorganic colorants are added to the mixture, wherein the inorganic colorants used are preferably spinels, and wherein not only pure shades, but also colour effects (patterns and spots) can be adjusted by combining several different inorganic colorants.

11. Method according to any one of claims 1 to 10, **characterised in that** the mixture is applied on a desired ceramic or metallic or enamelled or glass-like substrate by methods such as spin coating, dip coating, dipping, venting and preferably spraying, is dried and condensed to a porous inorganic layer.

12. Method according to claim 11, **characterised in that** the ceramic layer is condensed at temperatures of up to 1200° C, but preferably between 200° C and 1000° C.

13. Porous ceramic layer, obtainable by the method according to any one of claims 1 to 12.

14. Porous ceramic layer according to claim 13, **characterised in that** the layer has an inner surface of greater than 20 m₂/g, preferably greater than 80 m₂/g, and most preferably greater than 120 m₂/g.

15. Use of the porous ceramic layer according to claim 13 or 14 as a self-cleaning layer in ovens.

16. Use of the porous ceramic layer according to claim 13 or 14 as a carrier for active agents, preferably in medical devices.

17. Use of the porous ceramic layer according to claim 13 or 14 as a carrier for bactericidal substances for bactericidal applications.

18. Use of the porous ceramic layer according to claim 13 or 14 as a carrier for catalysts.

## Revendications

1. Procédé pour la fabrication d'une couche céramique poreuse, dans lequel une poudre céramique poreuse est mélangée avec un système liant inorganique qui contient au moins une nano-poudre ainsi qu'un solvant pour former une pâte, **caractérisé en ce que** la poudre céramique poreuse présente une surface spécifique, en majeure partie intérieure, élevée supérieure à 50 m²/g, de préférence supérieure à 100 m²/ g et, de manière particulièrement préférée, supérieure à 150 m²/g, la poudre céramique poreuse présentant une répartition granulométrique moyenne supérieure à 30 µm.

2. Procédé selon la revendication 1, **caractérisé en ce que** l'on utilise de l'eau comme solvant.

3. Procédé selon la revendication 1 ou 2, **caractérisé en ce que** l'on utilise de l'alcool, de préférence du 2- butoxyéthanol, de l'éthanol, du 1-propanol ou du 2-propanol ou comme solvant.

4. Procédé selon l'une quelconque des revendications 1 à 3, **caractérisé en ce que** l'on utilise comme poudre céramique poreuse un oxyde, un oxyhydrate, un chalcogénure, un nitrure ou un carbure de Si, Al, B, Zn, Zr, Cd, Ti, Fe ou Ti, de préférence une poudre d'oxyde et, de manière particulièrement préférée, un oxyde d'aluminium, une boehmite, un oxyde de zirconium, un oxyde de fer, un dioxyde de silicium, un dioxyde de titane, des silicates, de la poudre de chaux, des perlites, des zéolites ou des mélanges de ces particules solides inorganiques.

5. Procédé selon l'une quelconque des revendications 1 à 4, **caractérisé en ce que** la teneur en poudre céramique poreuse dans la pâte est comprise entre 20% et 80% en poids, toutefois de préférence, entre 50% et 80% en poids, toujours par rapport à la teneur en matières solides de la pâte.

6. Procédé selon l'une quelconque des revendications 1 à 5, **caractérisé en ce que** la nano-poudre contient des nanoparticules inorganiques, les nanoparticules inorganiques utilisées étant, en particulier, Al₂O₃, AlO(OH), ZrO₂, TiO₂, SiO₂, Fe₃O₄, SnO₂ ou des mélanges de ces nanoparticules, en outre, la grosseur moyenne des particules primaires des nanoparticules utilisées étant inférieure à 100 nm, de préférence inférieure à 50 nm et, de manière particulièrement préférée, inférieure à 20 nm et **en ce qu'**on utilise comme solvant dans le système de liant des alcools et/ou de l'eau.

7. Procédé selon l'une quelconque des revendications 1 à 6, **caractérisé en ce que** la teneur en nano-poudre dans la suspension céramique se trouvant sous forme de liant est comprise entre 1% et 20% en poids, toutefois de préférence, entre 5% et 15% en poids.

8. Procédé selon l'une quelconque des revendications 1 à 7, **caractérisé en ce que** la pâte contient une troisième poudre céramique, la troisième poudre céramique étant une poudre céramique avec une répartition granulométrique moyenne comprise entre 10 nm et 1 µm, de préférence entre 150 nm et 600 nm, la troisième poudre céramique utilisée étant un oxyde, de préférence, un oxyde d'aluminium, une boehmite, un oxyde de zirconium, un oxyde de fer, un dioxyde de silicium, un dioxyde de titane, des silicates ou de la poudre de chaux.

9. Procédé selon la revendication 8, **caractérisé en ce que** la teneur en troisième poudre céramique dans la pâte est comprise entre 5% et 50% en poids, toutefois de préférence, entre 10% et 30% en poids, toujours par rapport à la teneur en matières solides de la pâte.

10. Procédé selon l'une quelconque des revendications 1 à 9, **caractérisé en ce qu'**un ou plusieurs colorants inorganiques sont mélangés à la pâte, les colorants inorganiques utilisés étant, de préférence, des spinelles et des effets colorés (motifs et mouchetures) pouvant être obtenus de manière quelconque, en plus des teintes pures, grâce à la combinaison de plusieurs colorants inorganiques différents.

11. Procédé selon l'une quelconque des revendications 1 à 10, **caractérisé en ce que** la pâte est appliquée sur un substrat céramique ou métallique ou émaillé ou vitreux souhaité, séchée et compressée pour former une couche inorganique poreuse à l'aide de procédés tels que le spin coating (enduction par rotation), le dip coating (enduction par trempage), l'immersion, le noyage et, de préférence, la pulvérisation.

12. Procédé selon la revendication 11, **caractérisé en ce que** la couche céramique est compressée à des températures atteignant 1200°C, mais de préférence comprises entre 200°C et 1000°C.

13. Couche céramique poreuse pouvant être fabriquée selon le procédé selon l'une quelconque des revendications 1 à 12.

14. Couche céramique poreuse selon la revendication 13, **caractérisée en ce que** la couche présente une surface intérieure supérieure à 20 m²/g, de préférence supérieure à 70 m²/g et, de manière particulièrement préférée, supérieure à 120 m²/g.

15. Utilisation de la couche céramique poreuse selon la revendication 13 ou 14 comme couche autonettoyante dans des fours de cuisson.

16. Utilisation de la couche céramique poreuse selon la revendication 13 ou 14 comme support de médicament, de préférence dans les appareils médicaux.

17. Utilisation de la couche céramique poreuse selon la revendication 13 ou 14 comme support de substances bactéricides pour des applications bactéricides.

18. Utilisation de la couche céramique poreuse selon la revendication 13 ou 14 comme support de catalyseurs.
